# EUROPEAN PATENT APPLICATION

(11) **EP 4 503 182 A1**
(43) Date of publication of application: **05.02.2025**
(21) Application number: 23807962.8
(22) Date of filing: 22.05.2023
(51) Int. Cl.: H01M 4/36, H01M 4/525, H01M 4/505, C01G 53/00, H01M 4/02

(54) **CATHODE ACTIVE MATERIAL AND PREPARATION METHOD THEREFOR**

(30) Priority: 20.05.2022 KR 20220062286
(71) Applicant: LG Chem, Ltd., Yeongdeungpo-gu Seoul 07336 (KR)
(72) Inventor: JUNG, Won Sig, Daejeon 34122 (KR); BAEK, Hyeon Hui, Daejeon 34122 (KR); KIM, Sang Jun, Daejeon 34122 (KR); KIM, Jong Pil, Daejeon 34122 (KR); PARK, Hyun Ah, Daejeon 34122 (KR); LEE, Kang Hyeon, Daejeon 34122 (KR); RHEE, Tae Young, Daejeon 34122 (KR)
(74) Representative: Hoffmann Eitle
(86) International application number: PCT/KR2023/006939
(87) International publication number: WO 2023/224443

(57) **Abstract**

The present invention relates to a positive electrode active material in a form of a single particle, which includes a lithium transition metal oxide in a form of a single particle; a coating portion containing cobalt which is formed on the lithium transition metal oxide in the form of a single particle; and LiCoO₂ in a form of an island which is discontinuously formed on a surface, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1, and a method of preparing the same.

## Description

### TECHNICAL FIELD

### Cross-reference to Related Applications

This application claims priority from Korean Patent Application No. 10-2022-0062286, filed on May 20, 2022, the disclosure of which is incorporated by reference herein.

### Technical Field

The present invention relates to a positive electrode active material in a form of a single particle and a method of preparing the same.

### BACKGROUND ART

Demand for secondary batteries as an energy source has been significantly increased as technology development and demand with respect to mobile devices and electric vehicles have recently increased.

A lithium secondary battery is generally composed of a positive electrode, a negative electrode, a separator, and an electrolyte, and the positive electrode and the negative electrode respectively include active materials capable of intercalating and deintercalating lithium ions.

The positive electrode active material used in the lithium secondary battery generally has a form of a spherical secondary particle which is formed by aggregation of hundreds of submicron-sized fine primary particles. However, the positive electrode active material in the form of a secondary particle has a problem in that battery characteristics are degraded as the secondary particle is broken as the aggregated primary particles are separated during repeated charge and discharge.

In order to solve this problem, development of a positive electrode active material in a form of a single particle is being actively conducted, but, when preparing the positive electrode active material in the form of a single particle, since sintering at a higher temperature than that when preparing the positive electrode active material in the form of a secondary particle is required, there is a problem in that a ratio of a NiO reduction layer on a particle surface is increased. In a case in which the ratio of the NiO reduction layer on the surface of the positive electrode active material is increased, problems, such as an increase in battery resistance, a decrease in capacity, and a decrease in output, occur, and, accordingly, there is a need for a surface treatment technique capable of controlling the NiO reduction layer.

### DISCLOSURE OF THE INVENTION

### TECHNICAL PROBLEM

An aspect of the present invention provides a positive electrode active material, which may achieve a battery having improved cycle characteristics such as capacity retention and resistance increase rate, and a method of preparing the same.

### TECHNICAL SOLUTION

In order to solve the above-described tasks, the present invention provides a positive electrode active material and a method of preparing the same.
(1) The present invention provides a positive electrode active material in a form of a single particle which includes a lithium transition metal oxide in a form of a single particle; a coating portion containing cobalt which is formed on the lithium transition metal oxide in the form of a single particle; and LiCoO₂ in a form of an island which is discontinuously formed on a surface, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1.
(2) The present invention provides the positive electrode active material in the form of a single particle of (1) above, wherein the positive electrode active material in the form of a single particle has an average particle diameter (D₅₀) of 0.1 µm to 10 µm.
(3) The present invention provides the positive electrode active material in the form of a single particle of (1) or (2) above, wherein the positive electrode active material in the form of a single particle has a form in which 50 or less primary particles each composed of 10 or less single crystal grains are aggregated.
(4) The present invention provides the positive electrode active material in the form of a single particle of any one of (1) to (3) above, wherein the lithium transition metal oxide in the form of a single particle is a lithium composite transition metal oxide containing nickel (Ni), cobalt (Co), and manganese (Mn).
(5) The present invention provides the positive electrode active material in the form of a single particle of any one of (1) to (4) above, wherein the lithium transition metal oxide in the form of a single particle has a composition represented by Formula 1.

   [Formula 1] LiₐNi_{b}Co_{c}Mn_{d}M¹ₑO₂

   wherein, in Formula 1,
   M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
   0.9≤a≤1.1, 0.8≤b<1.0, 0<c<0.2, 0<d<0.2, 0≤e≤0.1, and b+c+d+e=1.
(6) The present invention provides the positive electrode active material in the form of a single particle of any one of (1) to (5) above, wherein the coating portion is a region ranging from 5 nm to 100 nm from the surface of the positive electrode active material in a central direction.
(7) The present invention provides the positive electrode active material in the form of a single particle of any one of (1) to (6) above, wherein a molar ratio of cobalt to nickel present on the surface of the positive electrode active material is in a range of 0.45 to 0.9.
(8) The present invention provides a method of preparing a positive electrode active material in a form of a single particle which includes steps of: (A) preparing a mixture by mixing a lithium transition metal oxide in a form of a single particle and a cobalt raw material; and (B) performing a heat treatment on the mixture at a temperature of 500°C or more to less than 680°C.
(9) The present invention provides the method of preparing a positive electrode active material in a form of a single particle of (8) above, wherein the lithium transition metal oxide in the form of a single particle in step (A) has a cation mixing of 5% or less.
(10) The present invention provides the method of preparing a positive electrode active material in a form of a single particle of (8) or (9) above, wherein the lithium transition metal oxide in the form of a single particle in step (A) contains 20,000 ppm or less of a lithium by-product.
(11) The present invention provides the method of preparing a positive electrode active material in a form of a single particle of any one of (8) to (10) above, wherein a molar ratio of the lithium transition metal oxide in the form of a single particle to the cobalt raw material in step (A) is in a range of 1:0.0001 to 1:0.1.
(12) The present invention provides the method of preparing a positive electrode active material in a form of a single particle of any one of (8) to (11) above, wherein the mixing in step (A) is dry mixing.
(13) The present invention provides the method of preparing a positive electrode active material in a form of a single particle of any one of (8) to (12) above, wherein the heat treatment of step (B) is performed in an oxygen atmosphere.

### ADVANTAGEOUS EFFECTS

A positive electrode active material according to the present invention may improve cycle characteristics of a battery including the same by satisfying that a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of a surface is greater than 1.

### BRIEF DESCRIPTION OF THE DRAWINGS

FIG. 1 is Raman spectra of surfaces of positive electrode active materials of Examples 1 to 3 and Comparative Examples 3 to 5.
FIG. 2 is Raman spectra of surfaces of positive electrode active materials of Comparative Examples 1 and 2.
FIG. 3(A) is a scanning electron microscope (SEM) image of the positive electrode active material of Example 1, FIG. 3(B) is an SEM image of the positive electrode active material of Example 2, FIG. 3(C) is electron probe microanalysis (EPMA) cobalt (Co) elemental mapping data of a cross-sectional sample of the positive electrode active material of Example 1, and FIG. 3(D) is EPMA Co elemental mapping data of a cross-sectional sample of the positive electrode active material of Comparative Example 2.
FIG. 4(A) is an SEM image of one particle of the positive electrode active material of Example 1, and FIG. 4(B) is electron backscatter diffraction (EBSD) Euler map data of the one particle of the positive electrode active material of Example 1.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

In the present specification, the expression "positive electrode active material in a form of a single particle" is a concept in contrast to a positive electrode active material in a form of a spherical secondary particle formed by aggregation of hundreds of primary particles which is prepared by a conventional method, wherein it means a positive electrode active material composed of 50 or less primary particles. Specifically, in the present invention, the positive electrode active material in the form of a single particle may be a single particle composed of one primary particle, or may be in the form of a secondary particle in which 2 to 50, 2 to 40, 2 to 30, 2 to 20, 2 to 15, 2 to 10, or 2 to 5 primary particles are aggregated. In this case, the expression "primary particle" denotes the smallest unit of particles recognized when the positive electrode active material is observed through a scanning electron microscope.

The primary particle may be composed of 10 or less single crystal grains, and the grain may be analyzed using an electron backscatter diffraction (EBSD) analyzer. The single crystal grain is a unit indicated by the same color in electron backscatter diffraction (EBSD) Euler map data of one positive electrode active material particle, wherein it is a grain in which a grain boundary does not exist.

An average particle diameter (D₅₀) in the present specification means a particle size on the basis of 50% in a volume cumulative particle size distribution of positive electrode active material or lithium transition metal oxide powder. The average particle diameter (D₅₀) may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

An average particle diameter (D_{EBSD}) of the single crystal grains in the present specification means a particle size on the basis of 50% in a volume cumulative particle size distribution of the single crystal grains which is obtained through EBSD analysis using a scanning electron microscope (SEM). The EBSD analysis may obtain an image with SEM-EBSD equipment (e.g., FEI Quanta 200-EDAX Velocity super OIM 8) and may analyze the image with an image analysis software (EDAX OIM Analysis).

Hereinafter, the present invention will be described in detail.

### Positive Electrode Active Material

The present invention provides a positive electrode active material in a form of a single particle which includes a lithium transition metal oxide in a form of a single particle; a coating portion containing cobalt which is formed on the lithium transition metal oxide in the form of a single particle; and LiCoO₂ in a form of an island which is discontinuously formed on a surface, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1.

The present inventors have found that, in a case in which the positive electrode active material includes LiCoO₂ in the form of an island which is discontinuously formed on a surface while being in the form of a single particle, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1, performance, particularly, cycle characteristics of a battery including the same are improved, thereby leading to the completion of the present invention. The ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ in the Raman spectrum of the surface of the positive electrode active material may be greater than 1, 1.5, or 2 or more.

In a case in which the ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ in the Raman spectrum of the surface of the positive electrode active material is 1 or less, there is a problem in that a ratio of a NiO reduction layer on the surface of the positive electrode active material is increased again because Co ions partially penetrate too deeply into the inside.

According to the present invention, the positive electrode active material in the form of a single particle may have an average particle diameter (D₅₀) of 0.1 µm to 10 µm. Specifically, the positive electrode active material in the form of a single particle may have an average particle diameter (D₅₀) of 0.1 µm, 1.0 µm, 2.0 µm or more, 5.0 µm, 6.0 µm, 7.0 µm, 8.0 µm, 9.0 µm, or 10.0 µm or less. In this case, since a rolling ratio of the battery including the positive electrode active material in the form of a single particle may be increased, the performance of the battery may be further improved.

According to the present invention, the positive electrode active material in the form of a single particle may have a form in which 50 or less, specifically, 30, 20, 10, or 5 or less primary particles each composed of 10 or less single crystal grains are aggregated. In this case, capacity and resistance performance of the battery may be improved, and occurrence of cracks in the particle in a process of repeating charge and discharge may be reduced. In this case, the single crystal grain may have an average particle diameter (D_{EBSD}) of 0.1 µm to 10 µm. Specifically, the single crystal grain may have an average particle diameter (D_{EBSD}) of 0.1 µm, 1.0 µm, 2.0 µm or more, 5.0 µm, 6.0 µm, 7.0 µm, 8.0 µm, 9.0 µm, or 10.0 µm or less.

According to the present invention, the lithium transition metal oxide in the form of a single particle may be a lithium composite transition metal oxide containing nickel (Ni), cobalt (Co), and manganese (Mn). In this case, the lithium transition metal oxide in the form of a single particle may contain 80 mol% or 85 mol% or more of nickel (Ni) among total metals excluding lithium.

According to the present invention, the lithium transition metal oxide in the form of a single particle may specifically have a composition represented by the following Formula 1.

[Formula 1] LiₐNi_{b}Co_{c}Mn_{d}M¹ₑO₂

In Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.9≤a≤1.1, 0.8≤b<1.0, 0<c<0.2, 0<d<0.2, 0≤e≤0.1, and b+c+d+e=1.
b represents an atomic fraction of nickel among metallic elements other than lithium in the lithium transition metal oxide, wherein b may be 0.8, 0.85 or more, 0.95, or 0.98 or less.
c represents an atomic fraction of cobalt among the metallic elements other than lithium in the lithium transition metal oxide, wherein c may be 0.01 or more, 0.1, or 0.2 or less.
d represents an atomic fraction of manganese among the metallic elements other than lithium in the lithium transition metal oxide, wherein d may be 0.01 or more, 0.1, or 0.2 or less.
e represents an atomic fraction of element M¹ among the metallic elements other than lithium in the lithium transition metal oxide, wherein e may be 0 or more, 0.02, 0.05, or 0.1 or less.

In the present invention, the coating portion is a layer which is formed by diffusion of cobalt from a surface of the lithium transition metal oxide in the form of a single particle in a central direction when the lithium transition metal oxide in the form of a single particle and a cobalt raw material are mixed and then heat-treated. Thus, a composition of the coating portion is similar to the composition of the lithium transition metal oxide in the form of a single particle which is included in the positive electrode active material of the present invention, but a ratio of the cobalt among the total metals other than lithium is greater than that of the lithium transition metal oxide in the form of a single particle. Ni present in the lithium transition metal oxide in the form of a single particle may be substituted with Co while the cobalt diffuses from the surface of the lithium transition metal oxide in the form of a single particle in the central direction, and the coating portion may have a structure identical to that of the lithium transition metal oxide in the form of a single particle, that is, a layered structure.

According to the present invention, the coating portion may be a region ranging from 5 nm to 100 nm from the surface of the positive electrode active material in the central direction. The coating portion may specifically be a region up to 5 nm, 10 nm, 20 nm, 30 nm, 40 nm, 50 nm, 60 nm, 70 nm, 80 nm, 90 nm, or 100 nm from the surface of the positive electrode active material in the central direction.

In the present specification, the coating portion is a region from the surface of the positive electrode active material to a point where a Co content measured through a transmission electron microscope (TEM)-energy dispersive X-ray spectroscopy (EDX) experiment is greater than 1.1 times a total average Co content (mol%) of the positive electrode active material. In this case, in the TEM-EDX experiment, after making a thin-film sample with a thickness of 100 nm to 200 nm from positive electrode active material powder with FEI's Helios G4 UX FIB equipment, an X-ray spectrum of an element for each position of the sample is measured using FEI's Titan G2 80-200 ChemiSTEM equipment and EDX (in-column super-X Energy Dispersive X-ray spectroscopy) unit (ChemiSTEM technology), and a molar ratio (mol%) value for each element may be obtained by comparing intensities.

In the present invention, the LiCoO₂ in the form of an island is discontinuously formed on the surface of the positive electrode active material. That is, the LiCoO₂ in the form of an island does not entirely cover the surface of the positive electrode active material, but is partially dispersed and distributed. The LiCoO₂ in the form of an island may be discontinuously formed on an area of 20% to 50% based on a total area of the surface of the positive electrode active material.

According to the present invention, a molar ratio of cobalt to nickel present on the surface of the positive electrode active material may be 0.45 to 0.9, specifically, 0.45 or more, 0.6, 0.7, 0.8, or 0.9 or less. In this case, since the LiCoO₂ in the form of an island is appropriately present on the surface, the cycle characteristics of the battery may be further improved. The molar ratio of the cobalt to the nickel present on the surface of the positive electrode active material may be obtained through electron spectroscopy for chemical analysis (ESCA) using K-alpha XPS equipment by Thermo Fisher Scientific Inc. In this case, the surface analyzed through the ESCA analysis may be a region from the outermost side of the positive electrode active material to 10 nm.

### Method of Preparing Positive Electrode Active Material

The present invention provides a method of preparing a positive electrode active material in a form of a single particle which includes the steps of: (A) preparing a mixture by mixing a lithium transition metal oxide in a form of a single particle and a cobalt raw material; and (B) performing a heat treatment on the mixture at a temperature of 500°C or more to less than 680°C.

The method of preparing a positive electrode active material according to the present invention is a method of preparing a positive electrode active material in a form of a single particle which includes a lithium transition metal oxide in a form of a single particle; a coating portion containing cobalt which is formed on the lithium transition metal oxide in the form of a single particle; and LiCoO₂ in a form of an island which is discontinuously formed on a surface, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1. That is, the method of preparing a positive electrode active material is a method of preparing the above-described positive electrode active material according to the present invention. The positive electrode active material according to the present invention may be prepared by appropriately adjusting a type of the cobalt raw material as well as the heat-treatment temperature of the mixture.

Hereinafter, the method of preparing a positive electrode active material will be described in more detail.

### Step (A)

Step (A) is a step of preparing a mixture by mixing a lithium transition metal oxide in a form of a single particle and a cobalt raw material.

In step (A), the lithium transition metal oxide in the form of a single particle may have an average particle diameter (D₅₀) of 0.1 µm to 10 µm. In this case, the positive electrode active material in the form of a single particle may have a form in which 50 or less primary particles each composed of 10 or less single crystal grains are aggregated.

According to the present invention, the lithium transition metal oxide in the form of a single particle in step (A) may have a cation mixing of 5% or less. In this case, since an amount of impurities present in the resulting positive electrode active material is small, the performance of the battery may be improved. The cation mixing value is a value that measures a ratio (%) of substitution of lithium and other metal ions in a structure.

According to the present invention, the lithium transition metal oxide in the form of a single particle in step (A) may contain 20,000 ppm or less of a lithium by-product. In this case, since the amount of the impurities present in the resulting positive electrode active material is small, a process may be improved by reducing an aggregation phenomenon of a slurry (composition for forming a positive electrode active material) when a positive electrode is prepared.

The lithium transition metal oxide in the form of a single particle of step (A) may be prepared by mixing a positive electrode active material precursor (e.g., transition metal hydroxide, transition metal oxyhydroxide, etc.), a lithium raw material (e.g., lithium carbonate (Li₂CO₃), lithium hydroxide (LiOH), LiNO₃, CH₃COOLi, Li₂(COO)₂, etc.), and optionally a doping element (e.g., Y, Zr, or Al) raw material and sintering at a high temperature. In this case, the sintering may be one-step sintering or multi-step sintering. In a case in which the sintering is two-step sintering, the lithium raw material may be collectively mixed before primary sintering, or may be dividedly mixed before the primary sintering and before secondary sintering. The sintering may be performed at a temperature of 700°C to 900°C in an oxygen atmosphere.

According to the present invention, a molar ratio of the lithium transition metal oxide in the form of a single particle to the cobalt raw material in step (A) may be in a range of 1:0.0001 to 1:0.1, 1:0.001 to 1:0.05, or 1:0.01 to 1:0.05. That is, an amount of the cobalt raw material may be 0.01 mol%, 0.10 mol%, 1 mol% or more, 5 mol%, or 10 mol% or less based on the lithium transition metal oxide in the form of a single particle. In a case in which the amount of the cobalt raw material is within the above range, since the coating portion containing cobalt is appropriately formed, the performance of the battery may be further improved.

The cobalt raw material may be an acetate, nitrate, sulfate, halide, sulfide, hydroxide, oxide, or oxyhydroxide containing cobalt. For example, the cobalt raw material may be Co(OH)₂ or Co₂O₃, and may preferably be Co(OH)₂. In a case in which a highly reactive material, for example, Co(OH)₃ or cobalt acetate, is used as the cobalt raw material, since an excessively large amount of Co penetrates into the inside, there may be a problem in that the coating portion containing cobalt hardly exists.

According to the present invention, the mixing in step (A) may be dry mixing. That is, a powder-type cobalt raw material may be simply mixed with the lithium transition metal oxide in the form of a single particle without a solvent. In this case, costs may not only be reduced by simplifying the process, but a positive electrode active material having uniform quality may also be formed.

A coating element-containing raw material may be additionally mixed in addition to the lithium transition metal oxide in the form of a single particle and the cobalt raw material in step (A), and a metallic element included in the coating element-containing raw material may be Al, Zr, B, W, Mo, Cr, Nb, Mg, Hf, Ta, La, Ti, Sr, Ba, Sn, Y, Zn, Ce, F, P, or S. The coating element-containing raw material may be an acetate, nitrate, sulfate, halide, sulfide, hydroxide, oxide, or oxyhydroxide containing the metallic element. For example, in a case in which the metallic element is B, boric acid (H₃BO₃) or the like may be used.

### Step (B)

Step (B) is a step of performing a heat treatment on the mixture at a temperature of 500°C or more to less than 680°C. Through the step, a coating portion is formed while cobalt is diffused from the surface of the lithium transition metal oxide in the form of a single particle in the central direction, and LiCoO₂ in the form of an island is discontinuously formed on the surface of the positive electrode active material at the same time. Particularly, in a case in which the heat-treatment temperature is within the above range, since Co present outside as a LiCoO₂ phase does not penetrate much into the positive electrode active material during a heating process, a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface of the prepared positive electrode active material may be greater than 1.

The heat treatment of step (B) may be performed at a temperature of 500°C or more to less than 680°C. Specifically, the heat-treatment temperature may be 500°C, 550°C, 600°C or more, 660°C or less, or less than 680°C. In a case in which the heat-treatment temperature is within the above range, since the coating portion containing cobalt is appropriately formed, the cycle characteristics of the battery may be further improved.

In a case in which the heat-treatment temperature is less than 500°C, there is a problem in that the coating portion containing cobalt hardly exists, and, in a case in which the heat-treatment temperature is 680°C or more, since the Co present outside as the LiCoO₂ phase penetrates much into the positive electrode active material during the heating process, there is a problem in that the cycle characteristics of the battery are degraded.

The heat treatment of step (B) may be performed for 2 hours to 12 hours for productivity and sintering uniformity. Specifically, the heat treatment of step (B) may be performed for 2 hours or more, 6 hours, 9 hours, or 12 hours or less.

### Positive Electrode

Also, the present invention may provide a positive electrode including the positive electrode active material.

Specifically, the positive electrode includes a positive electrode collector, and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described. Also, as another method, the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Examples

### Preparation Example 1: Preparation of Lithium Transition Metal Oxide in the Form of Single Particle Which Had Composition Represented by LiNi_{0.88}Co_{0.03}Mn_{0.09}O₂

A positive electrode active material precursor, which had a composition represented by Ni_{0.88}Co_{0.03}Mn_{0.09}(OH)₂ and had an average particle diameter (D₅₀) of 3.5 µm, and LiOH were mixed in a molar ratio of 1:1.05 and primarily sintered at a temperature of 880°C for 9 hours in an oxygen atmosphere to prepare a pre-sintered product, and the pre-sintered product was ground and then secondarily sintered at a temperature of 780°C for 9 hours in an oxygen atmosphere to prepare a lithium transition metal oxide in a form of a single particle which had a composition represented by LiNi_{0.88}Co_{0.03}Mn_{0.09}O₂.

### Preparation Example 2: Preparation of Lithium Transition Metal Oxide in the Form of Single Particle Which Had Composition Represented by LiNi_{0.95}Co_{0.03}Mn_{0.02}O₂

A positive electrode active material precursor, which had a composition represented by Ni_{0.95}Co_{0.03}Mn_{0.02}(OH)₂ and had an average particle diameter (D₅₀) of 3.5 µm, and LiOH were mixed in a molar ratio of 1:1.05 and primarily sintered at a temperature of 850°C for 9 hours in an oxygen atmosphere to prepare a pre-sintered product, and the pre-sintered product was ground and then secondarily sintered at a temperature of 750°C for 9 hours in an oxygen atmosphere to prepare a lithium transition metal oxide in a form of a single particle which had a composition represented by LiNi_{0.95}Co_{0.03}Mn_{0.02}O₂.

### Examples and Comparative Examples

### Example 1

A mixture was prepared by mixing the lithium transition metal oxide in the form of a single particle, which had been prepared in Preparation Example 1, with powder-type Co(OH)₂ (Huayou Cobalt Co., Ltd.) at a molar ratio of 1:0.02. The mixture was heat-treated at a temperature of 660°C for 5 hours in an oxygen atmosphere to prepare a positive electrode active material in a form of a single particle.

### Example 2

A positive electrode active material in a form of a single particle was prepared in the same manner as in Example 1 except that the mixture was heat-treated at a temperature of 680°C.

### Example 3

A mixture was prepared by mixing the lithium transition metal oxide in the form of a single particle, which had been prepared in Preparation Example 2, with powder-type Co(OH)₂ (Huayou Cobalt Co., Ltd.) at a molar ratio of 1:0.02. The mixture was heat-treated at a temperature of 660°C for 5 hours in an oxygen atmosphere to prepare a positive electrode active material in a form of a single particle.

### Comparative Example 1

The lithium transition metal oxide in the form of a single particle, which had been prepared in Preparation Example 1, was used as a positive electrode active material of Comparative Example 1.

### Comparative Example 2

The lithium transition metal oxide in the form of a single particle, which had been prepared in Preparation Example 2, was used as a positive electrode active material of Comparative Example 1.

### Comparative Example 3

A positive electrode active material was prepared in the same manner as in Example 1 except that the mixture was heat-treated at a temperature of 700°C.

### Comparative Example 4

A positive electrode active material was prepared in the same manner as in Example 1 except that the mixture was heat-treated at a temperature of 720°C.

### Comparative Example 5

A positive electrode active material was prepared in the same manner as in Example 3 except that the mixture was heat-treated at a temperature of 700°C.

### Experimental Examples

### Experimental Example 1: Positive Electrode Active Material Analysis

### - Raman Spectrum Analysis of Surface of the Positive Electrode Active Material

A surface Raman spectrum of each of the positive electrode active materials of Examples 1 to 3 and Comparative Examples 1 to 5 was obtained using a Raman spectrometer (Nanophoton Corporation) (excitation laser wavelength: 532 nm), and the spectrum was analyzed.

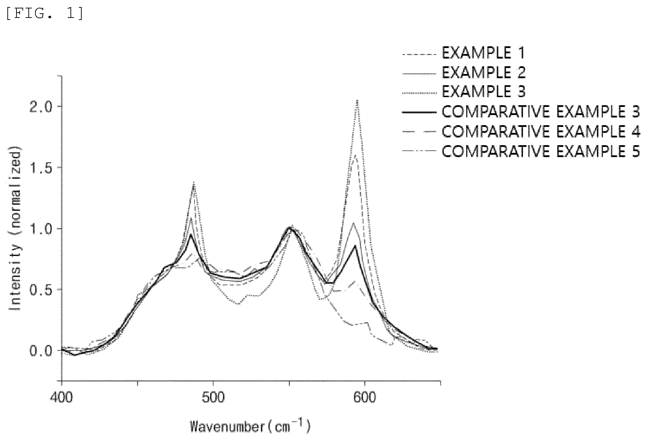

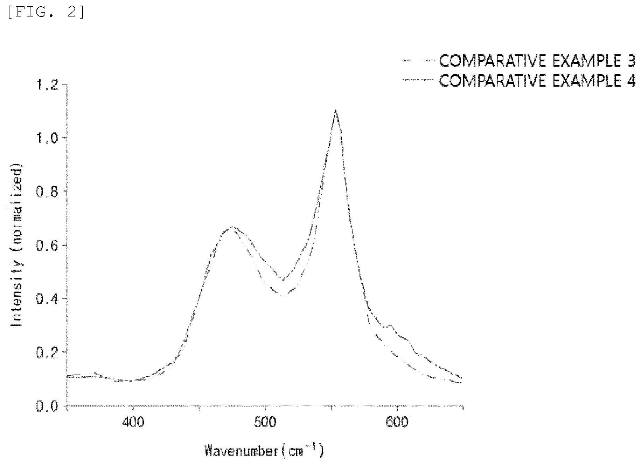

The Raman spectrum of the surface of each positive electrode active material is illustrated in FIGS. 1 and 2, and a ratio of an intensity of a peak (550 cm⁻¹ to 620 cm⁻¹) corresponding to an A1g vibration mode of LiCoO₂ to an intensity of a peak (520 cm⁻¹ to 580 cm⁻¹) corresponding to an A1g vibration mode of LiNiO₂ in the Raman spectrum is presented in Table 1 below.

For reference, since the peak corresponding to LiCoO₂ was not shown in the Raman spectra of the surfaces of the positive electrode active materials of Comparative Examples 1 and 2 (see FIG. 2), Comparative Examples 1 and 2 were not shown in Table 1 below.

**[Table 1]**

| | Ratio of the intensity of the peak (550 cm⁻¹ to 620 cm⁻¹) corresponding to the A1g vibration mode of LiCoO₂ to the intensity of the peak (520 cm⁻¹ to 580 cm⁻¹) corresponding to the A1g vibration mode of LiNiO₂ |
|---|---|
| Example 1 | 1.60 |
| Example 2 | 1.04 |
| Example 3 | 2.04 |
| Comparative Example 3 | 0.85 |
| Comparative Example 4 | 0.56 |
| Comparative Example 5 | 0.23 |

Referring to Table 1, in the Raman spectra of the surfaces of the positive electrode active materials of Examples 1 to 3, the ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ was greater than 1, but, with respect to Comparative Examples 3 to 5, it may be confirmed that the ratio was 1 or less.

### - Positive Electrode Active Material Morphology and Co Elemental Analysis

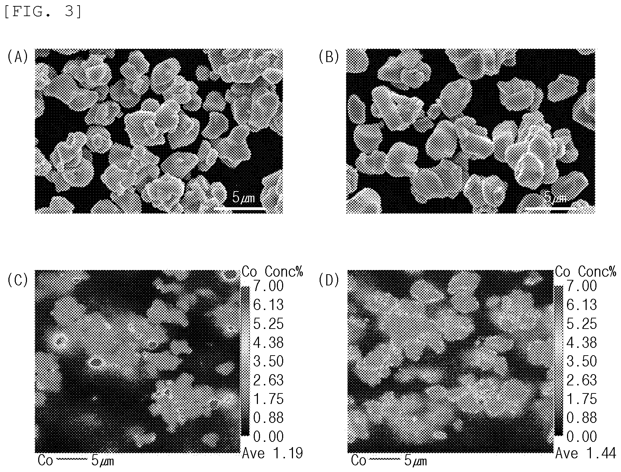

SEM images of the positive electrode active materials of Examples 1 and 2 and EPMA Co elemental mapping data of cross-sectional samples of the positive electrode active materials of Example 1 and Comparative Example 2 were obtained using an electron probe microanalyzer (JEOL Ltd., JXA-iHP200F) (accelerating voltage: 15 kV, probe current: 20 nA, dwell time: 20 ms), and these are presented in FIG. 3. The cross-sectional samples of the positive electrode active materials of Example 1 and Comparative Example 2 were prepared by performing Ar ion milling for 2 hours using an argon ion milling system (HITACHI, IM-5000) (accelerating voltage: 6 kV).

FIG. 3(A) is the SEM image of the positive electrode active material of Example 1, FIG. 3(B) is the SEM image of the positive electrode active material of Example 2, FIG. 3(C) is the EPMA Co elemental mapping data of the cross-sectional sample of the positive electrode active material of Example 1, and FIG. 3(D) is the EPMA Co elemental mapping data of the cross-sectional sample of the positive electrode active material of Comparative Example 2.

Referring to FIG. 3, it may be confirmed that the positive electrode active materials of Examples 1 and 2 were positive electrode active materials in the form of a single particle, and, with respect to the positive electrode active material of Example 1, it may be confirmed that a large amount of LiCoO₂ in the form of an island was not only discontinuously formed on the surface thereof (red and light green portions), but a coating portion (light blue portion) was also formed due to cobalt that was diffused while cobalt coating proceeded. In contrast, it may be confirmed that the positive electrode active material of Comparative Example 2 had a coating portion in which Co was relatively uniformly dispersed.

### - Crystal Analysis of Positive Electrode Active Material Particle

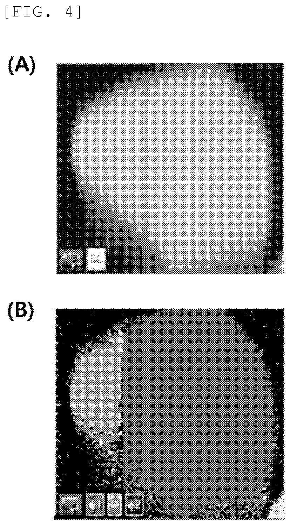

FIG. 4(A) is an SEM image of one particle of the positive electrode active material of Example 1, and FIG. 4(B) is electron backscatter diffraction (EBSD) Euler map data of the one particle of the positive electrode active material of Example 1. Since single crystal grains were measured as the same color in the Euler map, it may be confirmed that, referring to FIG. 4, the positive electrode active material of Example 1 was a particle composed of two single crystal grains.

In EBSD analysis, a positive electrode was irradiated with an argon (Ar) ion beam by using HITACHI's IM5000 (accelerating voltage: 6 kV) and cut by an ion milling method to obtain a cross section of the positive electrode, and the cross section of the positive electrode was measured and analyzed using JSM-7900F by JEOL Ltd. (accelerating voltage: 20 kV). AztecCrystal by OXFORD Instruments was used as an image processing-EBSD quantification analysis software.

During the EBSD analysis, after a composition for forming a positive electrode active material layer was prepared by adding the positive electrode active material, a carbon black conductive agent (Denka Company Limited, Denka Black), and a PVdF binder (Kureha Corporation, KF1300) to a N-methylpyrrolidone (NMP) solvent (Daejung Chemicals & Metals, Co., Ltd.) at a weight ratio of 95:3:2, the positive electrode was prepared by coating one surface of a 20 µm thick aluminum foil current collector with the composition for forming a positive electrode active material layer and drying the coated current collector at a temperature of 135°C for 3 hours.

### - Analysis of Molar Ratio of Cobalt to Nickel Present On the Surface

A molar ratio (hereinafter, referred to as a Co/Ni molar ratio) of cobalt to nickel present on the surface of each of the positive electrode active materials of Examples 1 to 3 and Comparative Examples 1 to 5 was measured through electron spectroscopy for chemical analysis (ESCA) using K-alpha XPS equipment (Al-Kα X-ray source: 1486.6 eV) by Thermo Fisher Scientific Inc., and the results thereof are presented in Table 2 below. The surface analyzed through the ESCA analysis was a region from the outermost side of the positive electrode active material to 10 nm.

**[Table 2]**

| | Co/Ni molar ratio |
|---|---|
| Example 1 | 0.49 |
| Example 2 | 0.47 |
| Example 3 | 0.52 |
| Comparative Example 1 | - |
| Comparative Example 2 | - |
| Comparative Example 3 | 0.33 |
| Comparative Example 4 | 0.35 |
| Comparative Example 5 | 0.32 |

Referring to Table 2, it may be confirmed that the positive electrode active materials of Examples 1 to 3 had a Co/Ni molar ratio of about 0.45 to about 0.55, but Comparative Examples 3 to 5 had a Co/Ni molar ratio of less than 0.45.

### Experimental Example 2: Battery Characteristics Evaluation

### (Half-cell Preparation)

A composition for forming a positive electrode active material layer was prepared by adding each of the positive electrode active materials prepared in Examples 1 to 3 and Comparative Examples 1 to 5, a carbon black conductive agent (Denka Company Limited, Denka Black), and a PVdF binder (Kureha Corporation, KF1300) to a N-methylpyrrolidone (NMP) solvent (Daejung Chemicals & Metals, Co., Ltd.) at a weight ratio of 95:3:2.

A positive electrode active material layer was prepared by coating one surface of a 20 µm thick aluminum foil current collector with the composition for forming a positive electrode active material layer and drying the coated current collector at a temperature of 135°C for 3 hours. Subsequently, a positive electrode was prepared by rolling the positive electrode active material layer by a roll-pressing method such that a porosity of the positive electrode active material layer after the rolling was 20 vol%.

A half-cell was prepared by using lithium metal as a negative electrode together with the positive electrode.

### (Evaluation of Battery Cycle Characteristics)

After each of the above-prepared half-cells was charged at a constant current (CC) of 0.2 C to 4.25 V at 25°C and then charged at a constant voltage (CV) of 4.25 V until the charging current was 0.05 mAh (cut-off current), each half-cell was left standing for 20 minutes and then discharged at a constant current of 0.2 C to 2.5 V.

Thereafter, the cell was transferred to a chamber at 45°C, and charging of the cell at a constant current of 0.33 C to 4.25 V, charging of the cell at a constant voltage (CV) of 4.25 V until the charging current was 0.05 mAh (cut-off current), and discharging of the cell at a constant current of 0.33 C to 2.5 V were set as one cycle and 30 cycles of the charging and discharging were performed. In this case, a percentage of discharge capacity in a 30^{th} cycle to discharge capacity in a 1^{st} cycle was set as a capacity retention and the capacity retentions are presented in Table 3 below. Also, a percentage of a direct current internal resistance (DCIR) value in the 30^{th} cycle to a DCIR value in the 1^{st} cycle was set as a resistance increase rate and the resistance increase rates are presented in Table 3 below. For reference, a DCIR value in an n^{th} cycle is a value calculated by dividing a difference between a voltage at 10 seconds after the start of discharging and a voltage in a fully-charged state, which was obtained while discharging the cell at a constant current of 0.33 C to 2.5 V, by a current in the n^{th} cycle.

**[Table 3]**

| | Capacity retention (%) | Resistance increase rate (%) |
|---|---|---|
| Example 1 | 97.0 | 135.2 |
| Example 2 | 96.9 | 134.8 |
| Example 3 | 96.8 | 132.8 |
| Comparative Example 1 | 95.4 | 144.5 |
| Comparative Example 2 | 95.8 | 150.4 |
| Comparative Example 3 | 95.6 | 151.3 |
| Comparative Example 4 | 95.5 | 152.2 |
| Comparative Example 5 | 95.2 | 145.8 |

Referring to Table 3, with respect to the batteries including the positive electrode active materials of Examples 1 to 3, it may be confirmed that cycle characteristics were better than those of the batteries including the positive electrode active materials of the comparative examples. As a result, with respect to the batteries including the positive electrode active material according to the present invention which was in the form of a single particle and included LiCoO₂ in the form of an island which was discontinuously formed on the surface, wherein the ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ in the Raman spectrum of the surface was greater than 1, since the ratio of the NiO reduction layer present on the surface of the positive electrode active material particle was low, it may be confirmed that the cycle characteristics were excellent.

## Claims

1. A positive electrode active material in a form of a single particle, the positive electrode active material comprising:
a lithium transition metal oxide in a form of a single particle;
a coating portion containing cobalt which is formed on the lithium transition metal oxide in the form of a single particle; and
LiCoO₂ in a form of an island which is discontinuously formed on a surface,
wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface is greater than 1.

2. The positive electrode active material in the form of a single particle of claim 1, wherein the positive electrode active material in the form of a single particle has an average particle diameter (D₅₀) of 0.1 µm to 10 µm.

3. The positive electrode active material in the form of a single particle of claim 1, wherein the positive electrode active material in the form of a single particle has a form in which 50 or less primary particles each composed of 10 or less single crystal grains are aggregated.

4. The positive electrode active material in the form of a single particle of claim 1, wherein the lithium transition metal oxide in the form of a single particle is a lithium composite transition metal oxide containing nickel (Ni), cobalt (Co), and manganese (Mn).

5. The positive electrode active material in the form of a single particle of claim 1, wherein the lithium transition metal oxide in the form of a single particle has a composition represented by Formula 1:
[Formula 1] LiₐNi_{b}Co_{c}Mn_{d}M¹ₑO₂
wherein, in Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.9≤a≤1.1, 0.8≤b<1.0, 0<c<0.2, 0<d<0.2, 0≤e≤0.1, and b+c+d+e=1.

6. The positive electrode active material in the form of a single particle of claim 1, wherein the coating portion is a region ranging from 5 nm to 100 nm from the surface of the positive electrode active material in a central direction.

7. The positive electrode active material in the form of a single particle of claim 1, wherein a molar ratio of cobalt to nickel present on the surface of the positive electrode active material is in a range of 0.45 to 0.9.

8. A method of preparing a positive electrode active material in a form of a single particle, the method comprising steps of:
(A) preparing a mixture by mixing a lithium transition metal oxide in a form of a single particle and a cobalt raw material; and
(B) performing a heat treatment on the mixture at a temperature of 500°C or more to less than 680°C.

9. The method of claim 8, wherein the lithium transition metal oxide in the form of a single particle in step (A) has a cation mixing of 5% or less.

10. The method of claim 8, wherein the lithium transition metal oxide in the form of a single particle in step (A) contains 20,000 ppm or less of a lithium by-product.

11. The method of claim 8, wherein a molar ratio of the lithium transition metal oxide in the form of a single particle to the cobalt raw material in step (A) is in a range of 1:0.0001 to 1:0.1.

12. The method of claim 8, wherein the mixing in step (A) is dry mixing.

13. The method of claim 8, wherein the heat treatment of step (B) is performed in an oxygen atmosphere.
